# EUROPEAN PATENT APPLICATION

(11) **EP 3 876 119 A1**
(43) Date of publication of application: **08.09.2021**
(21) Application number: 20305240.2
(22) Date of filing: 06.03.2020
(51) Int. Cl.: G06F 21/12, G06F 21/14, H04L 9/08, G06F 8/70

(54) **METHOD FOR PROTECTING A DATA IN A SOFTWARE APPLICATION**

(71) Applicant: THALES DIS FRANCE SA, 92190 Meudon (FR)
(72) Inventor: PANDIAN, Gautam Arvind, 13881 GEMENOS Cedex (FR)
(74) Representative: Grevin, Emmanuel

(57) **Abstract**

A method for managing a sensitive data (10) in a software application (20) that comprises the following steps: identifying two source codes (21, 22) of the software application which are expressed in different programming languages having different language levels; using a preset secret sharing scheme for generating a set of secret shares from the sensitive data, and identifying two disjoint groups of secret shares; uniquely assigning one of said groups to each of the source codes; building a modified software application (30) comprising two updated source codes (31, 32) generated by inserting each of said groups in its assigned source code.

## Description

### (Field of the invention)

The present invention relates to the field of data protection, and more particularly of software protection techniques. It relates particularly to methods of protecting a data in a software component by transforming its source code.

### (Background of the invention)

Nowadays many services are provided to users by running software applications. Such applications may run on various devices, mobile or not, such as desktop computers, laptops, point of sale terminals or smartphones. They may run locally or be implemented across a network like a LAN or the Internet. Software applications may be run in unsecured environments where an attacker may gain some control of the operation of the system running the application. Consequently, secure applications need to implement some security mechanisms in order to protect data handled by the application from being read or modified by an attacker.

A hacker may try to understand the operation of a software component by reverse-engineering of the compiled code executed by the system. He may then access secure information handled by the software and/or modify the software in order to perform malicious operations. Such a reverse-engineering is usually performed using tools, such as code analyzers and debuggers, that extract, from a compiled code, information about the operations of the code, such as a control flow graph describing the order of execution of instructions in the code.

In order to prevent analyzing of a software code by a malevolent person, software protection techniques have been developed, known as obfuscation. They rely on a set of transformation applied to the original code. Unfortunately, deobfuscator tools have been developed. Such tools make it possible to circumvent most of the protections put in place by the traditional techniques of obfuscation.

Consequently, there is a need for a method allowing to enhance protection of data in software application code against known reverse-engineering techniques.

### (Summary of the Invention)

The invention aims at solving the above mentioned technical problem.

An object of the present invention is a computer-implemented method for managing a sensitive data in a software application. The method comprises the steps of:
- identifying two source codes of the software application, one of said source codes being expressed in a first programming language and the other source code being expressed in a second programming language having a language level lower than the language level of the first programming language;
- using a preset secret sharing scheme for generating a set of secret shares from said sensitive data, and identifying two disjoint groups containing secret shares of the set;

- uniquely assigning one of said groups to each of said source codes; and
- building a modified software application comprising two updated source codes generated by inserting each of said groups in its assigned source code.

Advantageously, two executable codes may be generated respectively from each of said updated source codes and at the time of execution of the modified software application, the modified software application may retrieve the secret shares from both updated executable codes and rebuild the sensitive data by applying a predefined algorithm to the retrieved secret shares.

Advantageously, the sensitive data may be a key and the modified software application may use the rebuilt sensitive data to decipher an encrypted digital asset previously inserted in the modified software application.

Advantageously, the preset secret sharing scheme may be a threshold-based scheme, a threshold being defined by the minimum number of shares required to rebuild the sensitive data and the total number of secret shares inserted in the updated source codes may be equal to the threshold.

Advantageously, the preset secret sharing scheme may be the Shamir's secret sharing scheme or the Blakley's secret sharing scheme.

Advantageously, the preset secret sharing scheme may be a XOR-based scheme.

Advantageously, the method may comprise a step of inserting, in one of said source codes, at least one additional share whose content is independent from the sensitive data.

Advantageously, the disjoint groups may contain different number of secret shares and the updated source code to which the group with the most secret shares is assigned may be protected by applying an obfuscator tool.

Another object of the present invention is a protector system comprising a processing unit and a storage area. The storage area comprises instructions that, when executed by said processing unit, cause said system to:
- identify two source codes of a software application, one of said source codes being expressed in a first programming language and the other source code being expressed in a second programming language having a language level lower than the language level of the first programming language,
- use a preset secret sharing scheme for generating a set of secret shares from a sensitive data, and identify two disjoint groups containing secret shares of the set,
- uniquely assign one of said groups to each of said source codes and
- build a modified software application comprising two updated source codes generated by inserting each of said groups in its assigned source code.

Advantageously, the protector system may be configured to insert in said modified software application a set of additional instructions which is configured to retrieve said secret shares from executable codes generated respectively from each of said updated source codes and to rebuild the sensitive data by applying a predefined algorithm to the retrieved secret shares.

Advantageously, the sensitive data may be a key, the protector system may be configured to generate an encrypted digital asset enciphered with the sensitive data and to insert the encrypted digital asset in said modified software application and the additional instructions may be configured to use the rebuilt sensitive data to decipher the encrypted digital asset stored into the modified software application.

Advantageously, the protector system may be configured to insert, in one of said source codes, at least one additional share whose content is independent from the sensitive data.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of an original source codes to be protected according to the invention;
- Figures 2, 3 and 4 depict schematically several examples of updated source codes corresponding to the original source codes of Figure 1.
- Figure 5 depicts schematically an example of a system for transforming a source code according an embodiment of the invention;
- Figure 6 shows a flow chart of the transformation of source codes of an application according to an example of the invention; and
- Figure 7 shows a flow chart of the transformation of source codes according to an example of the invention.

### (Detailed description of the preferred embodiments)

In the description detailed below, reference is made to the accompanying drawings that show, by way of illustration, specific embodiments in which the invention may be practiced. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The description detailed below is, therefore, not to be taken in a limiting sense, and the scope of the present invention is defined only by the appended claims.

The invention aims at securing a software application which may comprise an executable part and static data.

A first aspect of the invention is a method for protecting a sensitive data by transforming the code of a software application before its execution. Such a securing method may be performed by a protector system treating the source code. The protector system may generate an updated software code from the original software code. The updated software code is more robust to reverse-engineering attacks. It is to be noted that the updated software code provides at least the same features (e.g. services delivered to a calling entity) as the original software code when running (after compilation/interpretation). In other words, both the original software code and the updated software code are functionally equivalent, apart from the additional instructions that may have been added in at least one updated source code for allowing the application to self-manage the retrieving of the sensitive data and the protected digital asset. The updated software code is intended to be executed on an execution device similar to the one which can run the original software code. The execution device may be a PC, a smart card, a secure element, a mobile device such as a smartphone or a tablet, a public terminal in a point of sale or any computer machine targeted by the compiler used to generate the executable code of the original software application.

The protector system is a securing device which may be any electronic device including a memory and a processing unit which can be hardware processor. For example it may be a personal computer on which a development environment was installed.

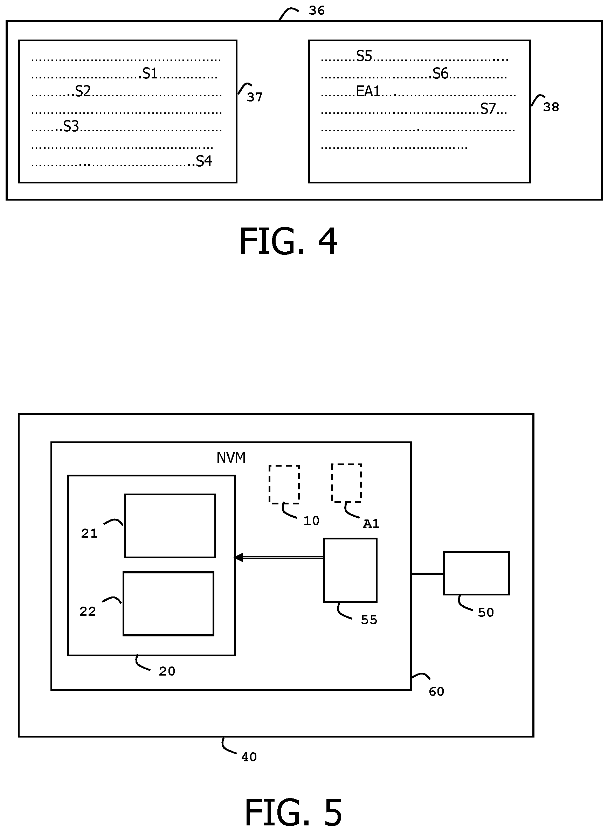

Figure 5 describes an exemplary embodiment of such a protector system 40 comprising a processor 50, and a software application 20 stored in a non-volatile memory 60 of the system 40. Although not shown at Figure 5, the protector system 40 may include a volatile memory (ex: RAM), a communication unit such as an Ethernet or Wi-Fi network adapter, a display and user input means like a keyboard and a mouse. The protector system 40 stores the code of the software application code 20 to be secured. The software application 20 comprises two complementary parts 21 and 22 which are designed to work together to provide functions of the software application. The first part (first source code) 21 is expressed in a first programming language which can be Java®, Kotlin® or Swift® for instance. The second part (second source code) 22 is expressed in a second programming language having a language level lower than the language level of the first programming language. For example the second part may be expressed in C, C++, Pascal or Cobol.

Programming languages may be classified into several categories associated to as many levels. For example, the highest language level may encompasses languages relying on an interpreter (like Java®), while the intermediate language level may encompasses languages relying on a compiler and the lowest level programming language encompasses assembly language. Other rules may be defined to classify the programming language into different levels.

The non-volatile memory 60 of the system 40 may also stores the updated software code (i.e. updated source code) obtained after transformation by the system 40 and the corresponding executable codes generated after the compilation phase.

In the example of Figure 5, the protector system 40 comprises instructions 55 intended to be executed by the processor 50 to provide the functions required by the invention.

The protector system 40 is configured to identify the two source codes 21 and 22 of the software application 20.

The protector system 40 is configured to use a preset secret sharing scheme for generating a set of secret shares from a sensitive data 10 and to identify two disjoint groups containing secret shares of the set. The sensitive data 10 may be a random AES (Advanced Encryption Standard) key of size 256 bits for instance.

The protector system 40 may be set with a default secret sharing scheme. In another embodiment, the protector system 40 may choose a secret sharing scheme according to a data provided by an external entity like a user or computer.

The secret sharing scheme (also named secret splitting scheme) refers to method for distributing an initial secret or the information about the initial secret among several units. Each unit is supposed to receive a share and the initial secret may be rebuild only if a sufficient number of shares are gathered.

According to the invention, several secret shares may be received by a unit. Preferably, the secret sharing scheme used by the protector system 40 is the Shamir's secret sharing scheme.

The protector system 40 is configured to uniquely assign one of the two disjoint groups to one source code and the other group to the other source code.

The protector system 40 is configured to build a modified software application comprising two updated source codes. The updated first source code is generated by inserting all secret shares of one of the group in the source code to which the group has been assigned. Similarly, the updated second source code is generated by inserting all secret shares of the other group in the second source code to which it has been assigned.

According to an embodiment of the invention, all secret shares of a group are allocated to one of the two source codes but not to the two source code at the same time.

Preferably, the protector system is configured to insert in at least one of the two source codes of the software application additional instructions which are designed to retrieve (during application runtime) the secret shares from the executable codes generated respectively from each of the updated source codes and to rebuild the sensitive data 10 by applying a predefined algorithm to the retrieved secret shares. The predefined algorithm corresponds to the secret sharing scheme previously used.

Thus the updated software application may autonomously retrieve the hidden sensitive data 10 during its execution.

In one embodiment, the used secret sharing scheme may be based on a known secret splitting scheme with one or more additional transformation operations in order to customize the way to retrieve the hidden sensitive data. In such an embodiment, opposite transformation operations have been applied to the original sensitive data before the generation of the set of secret shares from original sensitive data.

Advantageously, the sensitive data 10 may be a key allowing to protect access to a digital asset A1. The protector system may be configured to generate an encrypted digital asset EA1 by enciphering the digital asset A1 with the sensitive data 10 (by applying a preset algorithm) and to insert the encrypted digital asset EA1 in a source code of modified software application. The protector system may be configured to insert in at least one of the two source codes of the software application specific instructions which are designed to use the rebuilt sensitive data to decipher the encrypted digital asset EA1 stored in the modified software application. In other words, when running, the updated software application may automatically retrieve the value of the digital asset A1 which has been previously hidden in its own code.

The preset secret sharing scheme may be a threshold-based scheme like the Shamir's secret sharing scheme or the Blakley's secret sharing scheme. For such a scheme, a threshold is defined by the minimum number of shares required to rebuild the sensitive data 10. The total number of secret shares inserted in the updated source codes may be equal to the threshold.

In another embodiment, the preset secret sharing scheme may be a XOR-based scheme. In such a case, all generated secret shares are required to rebuild the sensitive data 10.

The protector system may be designed to insert, in one of the source codes of the application, at least one additional share AS8 whose content is independent from the sensitive data 10. For instance, the content of the additional share AS8 may be a random value or a predetermined pattern. Such a fake share aims at confusing a possible attacker trying to rebuild the sensitive data.

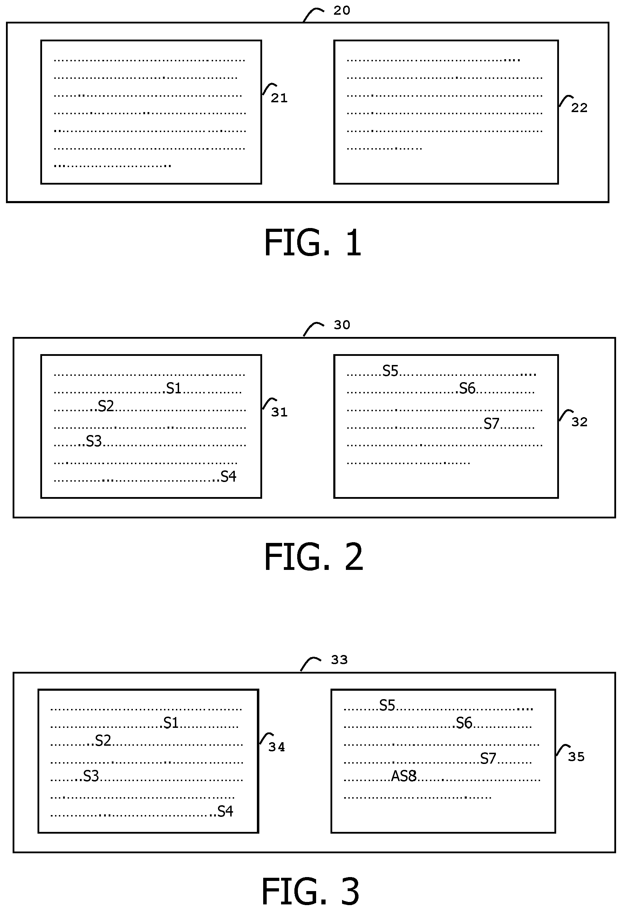

Figure 1 shows an example of source codes of the software application 20 to be transformed according to the invention.

The software application 20 comprises two source codes 21 and 22 containing a series of instructions shown by dots. These two source codes 21 and 22 have been developed in different programming languages whose levels are different. For instance, the source code 21 may be expressed in Java® while the source code 22 may be expressed in C.

Figure 2 shows updated source codes 31 and 32 of the modified software application 30 generated from the software application 20 according to an example the invention.

A set comprising at least seven secret shares (S1, S2, ..., S7) has been generated using a secret sharing scheme. The secret shares S1, S2, S3 and S4 have been inserted in the source code 21 to generate the updated source code 31. The secret shares S5, S6 and S7 have been inserted in the source code 22 to generate the updated source code 32.

Secret shares are static data which may go into the read-only section of the binary. The secret shares can be present as static data within a function or multiple functions or can be defined globally in different files of the source code.

It is to be noted that secret shares are inserted in the source code so that they do not disrupt the normal operation of the application.

The secret shares in on source file and the interface (s) to pass the shares to another part of the application (corresponding to another source code) can be in single or multiple source files. Similarly, the secret shares in a source code and the code to reconstruct the sensitive data from the shares can be present in a single or multiple source files. This file may expose interfacing APIs for application to fetch the decrypted digital asset. Secret shares are static data which goes into the read-only section of the binary. The code to construct them may go into the text section along with the application business logic.

It is to be noted that a single original source code may lead to several versions of updated source code by inserting different groups of secret shares, by inserting the secret shares at different locations or by using different seeds as input parameter of the secret shares generator of the selected secret sharing scheme.

Figure 3 shows updated source codes 34 and 35 of the modified software application 33 generated from the software application 20 according to an example the invention.

The updated source code 34 is similar to the updated source code 31 of Figure 2. The updated source code 35 has been generated by inserting an additional share AS8 in the updated source code 32 of Figure 2. The content of the additional share AS8 is independent from the sensitive data. In particular, the additional share AS8 is not a secret share generated by the secret sharing scheme. Preferably, the content of the additional share AS8 may be a random value.

The additional share AS8 is a fake share. It is to be noted that more than one fake share may be inserted in the updated source code(s).

In an embodiment, the updated source code 35 may be generated directly from the source code 22. In other words, the additional share may be inserted in the original source code 22 at the same time as the secret shares S5 - S7 are inserted in the source code 22.

Figure 4 shows updated source codes 37 and 38 of the modified software application 36 generated from the software application 20 according to an example the invention.

The updated source code 37 is similar to the updated source code 31 of Figure 2. The updated source code 38 has been generated by inserting the encrypted digital asset EA1 which has been generated by enciphering a digital asset A1 with the sensitive data 10.

In one embodiment, both the encrypted digital asset EA1 and a fake share may be inserted in the source code of the software application.

The number of secret shares shown at Figures 1-4 is provided as example only and may be different.

According to a preferred embodiment, modifications happen at the source code level and are propagated to corresponding executable codes of the software application. Generation of executable codes from the updated source codes can be performed in a conventional way.

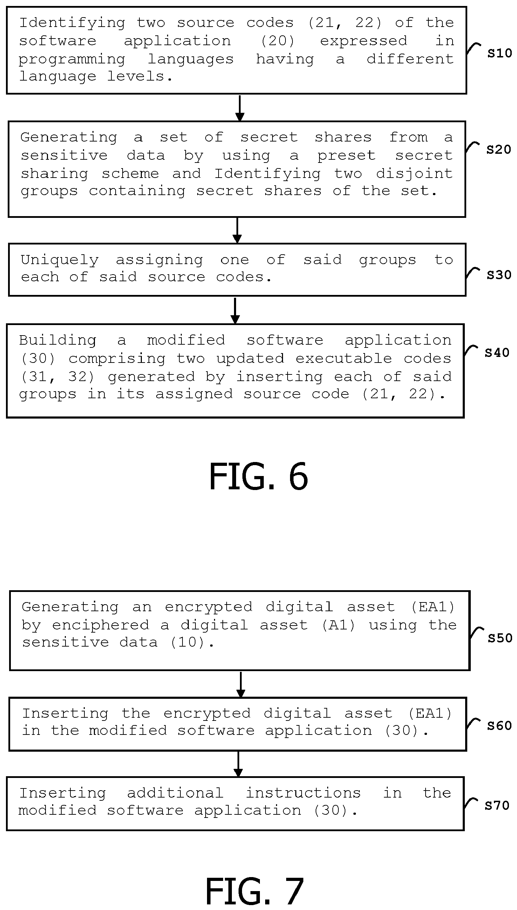

Figure 6 shows a flow chart of the transformation of the source codes of a software application according to an example of the invention.

In this example, the source codes 21 and 22 of the software application 20 are stored in the memory 60 of the protector system 40 as described at Figure 5.

Two source codes 21 and 22 are identified at step S10. They are expressed in programming languages having different language levels. When the software application is executed, it originally requires the combined execution of two executable codes generated from the two source codes. According to an example of the invention, when the software application is executed, it requires the combined execution of two executable codes generated from the two updated source codes.

At step S20, a set of secret shares is generated from a sensitive data 10 by using a preset secret sharing scheme. Two disjoint groups containing secret shares of the set are identified.

At step S30, each of said groups is uniquely assigning to one of the source codes. For example the first group may be automatically allocated to the source code 21 while the second group is assigned to the source code.

In one embodiment, the used secret sharing scheme is the Shamir's secret sharing scheme. The number of generated secret shares is greater than the threshold associated to the selected secret sharing scheme. Only a part of the generated secret shares may be inserted in the source codes of the software application.

Preferably the total number of secret shares inserted in the source codes is equal to the threshold. For instance, if N secret shares have been generated and M is the threshold, M secret shares may be selected (among the N) and split in two groups having respectively X and Y secret shares. Thus, M (= X + Y) secret shares inserted in the source codes are enough to rebuild the sensitive data at the time of execution of the application.

The number of secret shares inserted in one source code must be lower than the threshold.

In another embodiment, the used secret sharing scheme may be a XOR-based scheme. For instance, if P secret shares (S1, S2, ..., SP) have been generated, all the generated secret shares are divided in two groups comprising respectively X and Y secret shares. Thus, all P (= X + Y) secret shares inserted in the source codes are required to rebuild the sensitive data at the time of execution of the application by applying the following algorithm like: Requested result= S1 XOR S2 XOR ... XOR SP, where XOR is the eXclusive OR operator.

Then at step S40, the protector system 40 generates updated source codes by inserting the secret shares of each of the groups in its assigned source code. The protector system 40 also inserts in at least one the updated source codes specific instructions that allows the modified software application to retrieve the secret shares from both updated executable codes (generated from the updated source codes) and to rebuild the sensitive data associated to these secret shares by applying a predefined algorithm corresponding to preset secret sharing scheme. This operation allows to build the modified software application.

Figure 7 shows a flow chart of the transformation of the source codes of a software application according to another example of the invention.

In this example, steps S10 to S40 described at Figure 6 are assumed to be performed.

At step S50, the protector system 40 generates an encrypted digital asset EA1 by enciphered a digital asset A1 using the sensitive data 10 as a key. Usual enciphering algorithms may be used.

Then the protector system 40 inserts the encrypted digital asset EA1 in one of the updated source codes at step S60.

At step S70, the protector system 40 inserts specific instructions in at least one updated source code. The specific instructions allow the software application to retrieve the encrypted digital asset stored in the modified software application and to decipher it using the sensitive data as a key. In other words, when running, the updated software application embeds specific instructions which are automatically executed to retrieve the plain value of the digital asset which has been previously hidden in its code.

Advantageously, the sensitive data (when used as a key for enciphering a digital asset) may be generated with a strong entropy such that the cryptographic strength of the key is better than the cryptographic strength of the digital asset. For example, if the digital asset is a RSA private key of size 2048 bits (crypto strength is equivalent to symmetric key of 112 bits), then the sensitive data may be an AES Key of size 128 bits (crypto strength is 128 bits). For example, the value 0 can be discarded when drawing a random number for initializing the value of the sensitive data.

The steps described at Figure 6 and 7 are provided as example only. The order of the steps may be different or they may be merged. For instance, steps S20 may be executed before step S10, step S50 may be executed before step S10 or step S40 and S60 may be merged in a single step.

Although the examples describes previously relate to a single sensitive data, the invention may apply to protect several sensitive data in a software application. Similarly, the modified software application may embed several encrypted digital assets which have been encrypted by one or several sensitive data.

The invention may apply to software applications having more than two source codes and the secret shares may be distributed in more than two source codes.

Advantageously, at least one of the generated updated source codes can be protected by applying an obfuscator tool. In one embodiment, an obfuscation treatment is applied to the updated source code assigned to the group that contains more secret shares than the other.

The invention allows changing the appearance of a source code and thus changing the appearance of the executable code. Such modifications render the final executable code more complex to analyze by reverse-engineering.

The invention allows hardening the fetching of assets embedded in a software codes from static analysis without purely relying on usual obfuscation mechanisms.

The invention allows to enhance protection of sensitive data or asset embedded in pure software applications.

An advantage of the invention is that the developer of the original application does not need to take care of any specific design or implementation rules when developing an application since the protector system may automatically transform the developed application in a more secure software application.

The invention is not restricted to applications whose executable code is stored in a single file. It may apply to any software application code even if split in several files.

It must be understood, within the scope of the invention, that the above-described embodiments are provided as non-limitative examples.

The invention is not limited to the described embodiments or examples. In particular, the features described in the presented embodiments and examples may be combined.

The architecture of the protector system 40 shown at Figure 5 is provided as examples only. This architecture may be different.

## Claims

1. A computer-implemented method for managing a sensitive data (10) in a software application (20), **characterized in that** the method comprises the steps:
- identifying two source codes (21, 22) of the software application (20), one of said source codes being expressed in a first programming language and the other source code being expressed in a second programming language having a language level lower than the language level of the first programming language;
- using a preset secret sharing scheme for generating a set of secret shares from said sensitive data, and identifying two disjoint groups containing secret shares of the set;
- uniquely assigning one of said groups to each of said source codes;
- building a modified software application (30) comprising two updated source codes (31, 32) generated by inserting each of said groups in its assigned source code (21, 22).

2. The method according to claim 1, wherein two executable codes are generated respectively from each of said updated source codes (31, 32) and wherein at the time of execution of the modified software application (30), said modified software application retrieves said secret shares from both updated executable codes and rebuilds the sensitive data (10) by applying a predefined algorithm to the retrieved secret shares.

3. The method according to claim 2, wherein the sensitive data (10) is a key and wherein the modified software application (30) uses the rebuilt sensitive data to decipher an encrypted digital asset (EA1) previously inserted in the modified software application.

4. The method according to claim 1, wherein the preset secret sharing scheme is a threshold-based scheme, wherein a threshold is defined by the minimum number of shares required to rebuild the sensitive data (10) and wherein the total number of secret shares inserted in the updated source codes (31, 32) is equal to said threshold.

5. The method according to claim 1, wherein the preset secret sharing scheme is the Shamir's secret sharing scheme or the Blakley's secret sharing scheme.

6. The method according to claim 1, wherein the preset secret sharing scheme is a XOR-based scheme.

7. The method according to claim 1, wherein said method comprises a step of inserting, in one of said source codes, at least one additional share (AS8) whose content is independent from the sensitive data (10).

8. The method according to claim 1, wherein said disjoint groups contains different number of secret shares and wherein the updated source code to which the group with the most secret shares is assigned is protected by applying an obfuscator tool.

9. A protector system (40) comprising a processing unit (50) and a storage area (60), **characterized in that** the storage area comprises instructions (55) that, when executed by said processing unit, cause said system to:
- identify two source codes (21, 22) of a software application (20), one of said source codes being expressed in a first programming language and the other source code being expressed in a second programming language having a language level lower than the language level of the first programming language,
- use a preset secret sharing scheme for generating a set of secret shares from a sensitive data (10), and identify two disjoint groups containing secret shares of the set,
- uniquely assign one of said groups to each of said source codes and
- build a modified software application (30) comprising two updated source codes (31, 32) generated by inserting each of said groups in its assigned source code (21, 22).

10. The protector system according to claim 9, wherein the protector system is configured to insert in said modified software application a set of additional instructions which is configured to retrieve said secret shares from executable codes generated respectively from each of said updated source codes (31, 32) and to rebuild the sensitive data (10) by applying a predefined algorithm to the retrieved secret shares.

11. The protector system according to claim 9, wherein the sensitive data (10) is a key, wherein the protector system is configured to generate an encrypted digital asset (EA1) enciphered with the sensitive data and to insert the encrypted digital asset in said modified software application and wherein said additional instructions are configured to use the rebuilt sensitive data to decipher the encrypted digital asset stored in the modified software application.

12. The protector system according to claim 9, wherein the preset secret sharing scheme is a threshold-based scheme, wherein a threshold is defined by the minimum number of shares required to rebuild the sensitive data (10) and wherein the total number of secret shares inserted in the updated source codes (31, 32) is equal to the threshold.

13. The protector system according to claim 9, wherein the preset secret sharing scheme is the Shamir's secret sharing scheme or the Blakley's secret sharing scheme.

14. The protector system according to claim 9, wherein the preset secret sharing scheme is a XOR-based scheme.

15. The protector system according to claim 9, wherein the protector system is configured to insert, in one of said source codes, at least one additional share (AS8) whose content is independent from the sensitive data (10).
